# EUROPEAN PATENT SPECIFICATION

(11) **EP 2 023 623 B1**
(45) Date of publication and mention of the grant of the patent: **04.09.2013**
(21) Application number: 08161215.2
(22) Date of filing: 25.07.2008
(51) Int. Cl.: H04N 5/60

(54) **Apparatus and method for determining the transmission standard of a sound transmission transmitted with a television broadcast**
Gerät und Verfahren für die Erkennung der Übertragungsnorm einer Tonübertragung die mit einer Fernsehübertragung mitübertragen wird
Appareil et procédé pour déterminer la norme de transmission d'une émission audiophonique qui est transmise en accompagnement avec une émission de télédiffusion

(30) Priority: 27.07.2007 TW 96127675
(43) Date of publication of application: 11.02.2009
(73) Proprietor: Realtek Semiconductor Corp., Hsinchu 300 (TW)
(72) Inventor: Hong, Shan Ting, Tai Chung City (TW); Tu, Yi-Chang, Tai Nan City (TW); Liao, Ching-Hsien, Tai Nan City (TW); Chen, Show-Hong, Tai Pei County (TW); Peng, Ying-Chuan, Hsin Chu County (TW)
(74) Representative: Lang, Christian

(56) References cited:
- WO-A1-99/46931
- WO-A2-2007/040769
- DE-A1- 3 721 782
- MAHARATNA K ET AL: "A 16-bit cordic rotator for high-speed wireless lan" PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA, vol. 3, 5 September 2004 (2004-09-05), pages 1747-1751, XP010754240 ISBN: 978-0-7803-8523-8
- MAHARATNA K ET AL: "A cordic like processor for computation of arctangent and absolute magnitude of a vector" PROCEEDINGS - IEEE INTERNATIONAL SYMPOSIUM ON CIRCUITS AND SYSTEMS - 2004 IEEE INTERNATIONAL SYMPOSIUM ON CIRCUITS AND SYSTEMS - PROCEEDINGS; VOLUME I OF V: ANALOG SIGNAL PROCESSING 2004 INSTITUTE OF ELECTRICAL AND ELECTRONICS ENGINEERS INC. US,, vol. 2, 23 May 2004 (2004-05-23), pages 713-716, XP010720436 ISBN: 978-0-7803-8251-0
- "Chapter 4: Characterization of communication signals and systems" In: John G. Proakis: "Digital Communications", 1 January 1995 (1995-01-01), McGraw-Hill International Editions ISBN: 0-07-113814-5 pages 152-157,
- "Chapter 6: Linear CW modulation" In: A. Bruce Carlson: "Communication Systems: An Introduction to Signals and Noise in Electrical Communication", 1 January 1986 (1986-01-01), McGraw-Hill International Editions ISBN: 0-07-100560-9 pages 194-201,

## Description

### BACKGROUND OF THE INVENTION

### 1. Field of the Invention

The present invention is related to TV audio standards, and more particularly to an audio multi-standard detection apparatus and method applied to analog TV broadcasting.

### 2. Description of Related Art

Among TV broadcasting signals, the audio signal portion is defined by TV Audio Standard, which includes standards of non-stereo broadcasting, stereo broadcasting, and bilingual broadcasting. Currently, the global TV Audio Standards can primarily be divided into four categories of audio broadcasting format: A2, EIAJ, BTSC, and NICAM, wherein A2 can be further divided into five standards of FM A2 BG, FM A2 DK1, FM A2 DK2, FM A2 DK3, and FM A2 M, while NICAM can be further divided into four standards: AM mono L NICAM, FM mono I NICAM, FM mono BG NICAM, and FM mono DK NICAM. Generally, in different countries or areas the broadcasting systems are different. For example, Japan has adopted the EIAJ broadcasting system as national standard; Taiwan and the United States use BTSC broadcasting system; Europe and China use the NICAM and A2 broadcasting systems, etc.

For currently known TV signal receiving apparatuses, dedicated circuit designs are usually employed for each audio broadcasting signal's format, so as to ensure that the carriers and decoding method will conform to their respective national standard. However, this approach actually limits the products in the sense that they can only function in limited countries or regions; if there is a need for the products in other region, modifications in design are often necessary in order to match the broadcasting standard of that region. Consequently, not only the chip manufacturers have to design and manufacture different control chips for various TV audio standards, this also causes burden of development and design as well as difficulty of product maintenance on the TV manufacturers' part.
WO 2007/040769 A2 discloses a system and method of audio detection wherein carrier energy calculation is carried out by a CIC decimator, channel filter, absolute value logic and integrator. MAHARATNA K. et al "A 16-bit cordic rotator for high-speed wireless lan" PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA, IEEE, PISCATAWAY, NJ, USA, vol. 3, 5 September 2004 (2004-09-05), pages 1747-1751 and "A cordic like processor for computation of arctangent and absolute magnitude of a vector" PROCEEDINGS - IEEE INTERNATIONAL SYMPOSIUM ON CIRCUITS AND SYSTEMS - 2004 IEEE INTERNATIONAL SYMPOSIUM ON CIRCUITS AND SYSTEMS - PROCEEDINGS; VOLUME I OF V: ANALOG SIGNAL PROCESSING 2004 INSTITUTE OF ELECTRICAL AND ELECTRONICS ENGINEERS INC. US, vol. 2, 23 May 2004 (2004-05-23), pages 713-716 disclose a Coordinate Rotation Digital Computer.

### SUMMARY OF THE INVENTION

Therefore, an object of the present invention is, by way of carrier comparison, to compare a calculated carrier with the pre-recorded carrier bands of all audio broadcasting formats and determine the appropriate audio broadcasting format, so that a subsequent circuit can adjust the parameters, to correctly process and play audio signals. Accordingly, the goal of correctly distinguishing signals of various audio broadcasting formats in a single audio decoding chip, so as to adapt to different broadcasting system, can be achieved; consequently, efficiency and flexibility of the decoding chip can also be increased.

For achieving the object described above, the present invention provides an audio multi-standard detection apparatus which pre-records a plurality of audio broadcasting format carrier bands. In which, the audio multi-standard detection apparatus includes a carrier calculation unit and a switch controller. The carrier calculation unit is used for receiving an intermediate frequency signal and calculating the signal's first carrier energy magnitude in each of the "pre-recorded frequency bands". From these first carrier energy values the switch controller determines which frequency bands actually exist, and then analyzes via at least one threshold value the frequency band in order to determine the frequency band's primary carrier, based on which the switch controller obtains an effective carrier. Further, the switch controller compares the effective carrier with the "pre-recorded frequency bands" to selectively output the appropriate audio broadcasting format.

For achieving the object described above, the present invention further provides an audio multi-standard detection method, in which a plurality of audio broadcasting format carrier bands are pre-recorded, and a received intermediate frequency signal is converted into a baseband signal according to the values of the pre-recorded frequency bands. The method includes the steps of: scanning the carrier of the baseband signal on the recorded frequency bands and respectively calculating each carrier's first carrier energy; finding at least one carrier band from the first carrier energy values, and then analyze via at least one threshold value the frequency band in order to determine the frequency band's primary carrier, and from which obtains an effective carrier; finally, comparing the effective carrier with the "pre-recorded frequency bands" for deciding the appropriate audio broadcasting format, then providing the corresponding audio broadcasting format to the sequential circuits for adjusting parameters, which are used to correctly process and play audio signals. The present invention method thereby makes it possible to support different broadcast systems in various countries with a single audio decoding chip.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
- Fig. 1: is a schematic view showing the carrier frequency of audio standards;
- Fig. 2: is a block diagram showing an audio multi-standard detection apparatus in an embodiment according to the present invention;
- Fig. 3: is a block diagram showing the carrier frequency calculation unit in an embodiment according to the present invention;
- Fig. 4: is a schematic view showing the spectrum of NICAM audio broadcasting format according to the present invention;
- Fig. 5: is a flow chart showing the audio multi-standard detection method according to the present invention;
- Figs. 6A∼6B: are flow charts showing the procedure for deciding the audio broadcasting format in an embodiment according to the present invention;
- Fig. 7A: is a schematic view of the audio broadcasting format FM mono BG NICAM;
- Fig. 7B: is a schematic view of the audio broadcasting format FM A2 BG stereo; and
- Fig. 7C: is a schematic view of the audio broadcasting format FM A2 BG mono.

### DETAILED DESCRIPTION OF PREFERRED EMBODIMENTS

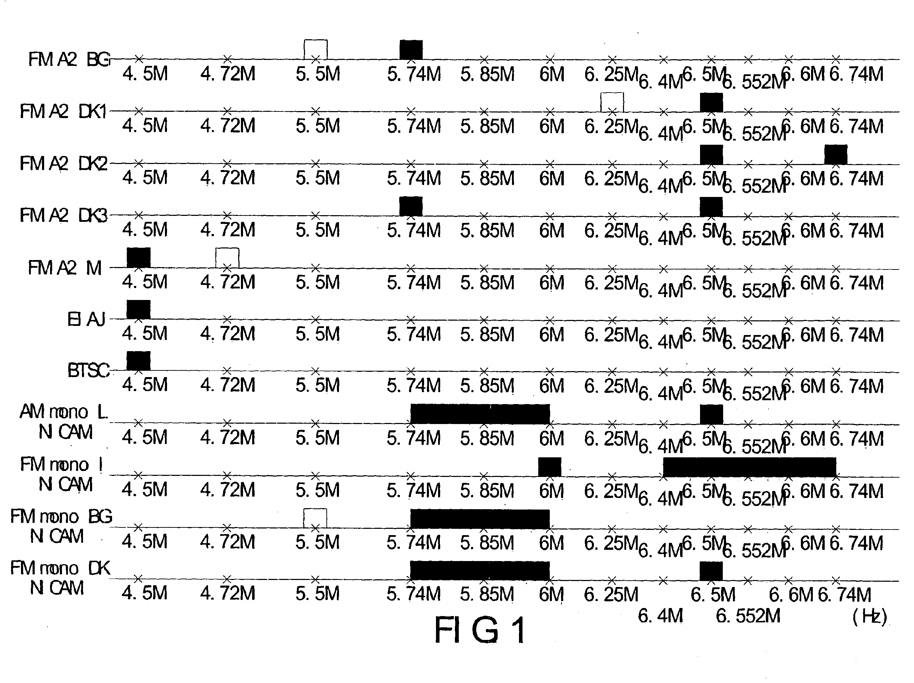

In the present invention, the mentioned audio multi-standards include various audio broadcasting formats (eleven types in total) used by broadcasting systems around the world, as shown in Fig. 1, which is a schematic view showing the carriers of audio standards, including FM A2 BG, FM A2 DK1, FM A2 DK2, FM A2 DK3, FM A2 M, EIAJ, BTSC, AM mono L NICAM, FM mono I NICAM, FM mono BG NICAM, and FM mono DK NICAM. Here, it should be noted that the carriers of the above described audio broadcasting formats are formed on one or more of the following twelve frequency bands, including 4.5MHz, 4.72MHz, 5.5MHz, 5.74MHz, 5.85MHz, 6MHz, 6.25MHz, 6.4MHz, 6.5MHz, 6.552MHz, 6.6MHz, and 6.74MHz.

For achieving bilingual or stereo effect, the carrier signal of some audio broadcasting formats will occupy and make use of two frequency bands, as shown in figure 1. Here, the filled bar represents the primary carrier and the hollow bar represents the auxiliary carrier, and the present invention achieves its goal of detecting audio broadcasting formats by detecting frequency band of the primary carrier. Besides, among all the audio broadcasting formats, only the NICAM audio broadcasting format contains both an analog and a digital carrier, while the other formats use only analog signals. Analog carriers are characterized by high energy, whereas digital carriers have lower energy but a wider band width.

Therefore, to accurately provide the audio broadcasting format, the detection apparatus of the present invention pre-records the carrier bands of the various audio broadcasting formats described above, and detects the frequency band occupied by the carrier of the received audio signals; then by comparing the detection result and the pre-recorded band information, an audio broadcasting format that matches the received audio signal can be found.

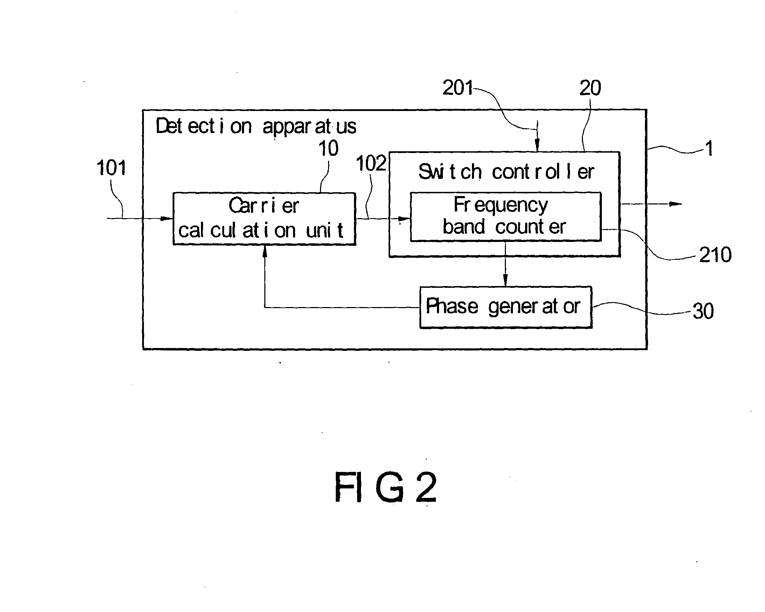

Please refer to Fig. 2, which is a block diagram showing an audio multi-standard detection apparatus in an embodiment according to the present invention. As shown, the present invention provides an audio multi-standard detection apparatus 1, which includes a carrier calculation unit 10, a switching controller 20, and a phase generator 30. Generally, the audio multi-standard detection apparatus 1 provides the audio detection function in a TV system, and is used for automatically detecting and evaluating the suitable audio standard for the received audio signals. The carrier calculation unit 10 is used for receiving an intermediate frequency signal 101 which is converted and outputted by a tuner (not shown) and an ADC (Analog/Digital Converter) (not shown), wherein the intermediate frequency signal 101 is an SIF signal (sound intermediate frequency signal) after being digitally converted. Then, the carrier calculation unit 10 calculates the energy magnitude of a first carrier 102 of the intermediate frequency signal 101 respectively on the above described twelve frequency bands. Since the phase and angle of frequency signal may vary due to waveform variation, the calculation of the carrier energy in the present invention is based on amplitude; that is, before calculating the first carrier energy 102, the received intermediate frequency signal 101 will be converted into an amplitude orthogonal component for facilitating the carrier energy calculation. Further, the first carrier energy 102 of the present invention is obtained through averaging a predetermined number (e.g., 4096) of samples of carrier energy, so as to generate a first carrier energy 102 which is more representative.

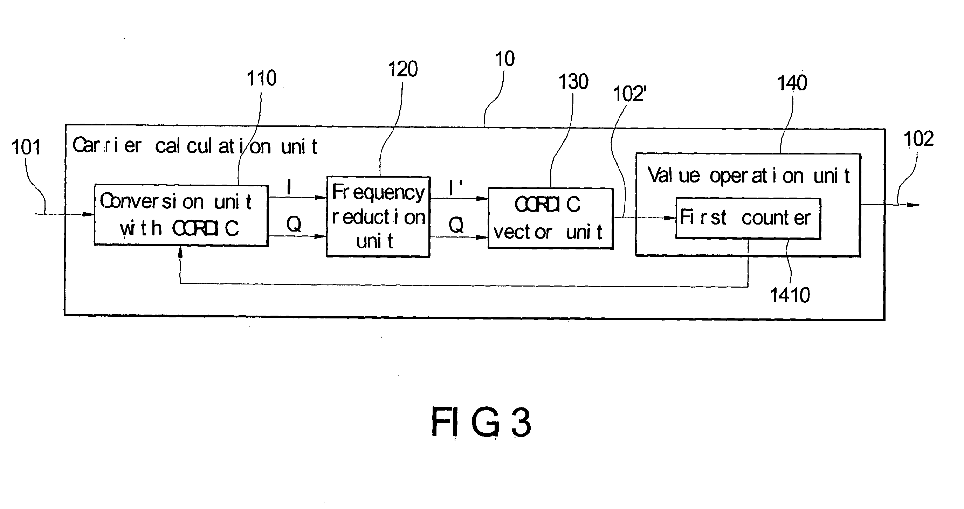

For further explanation of the calculation of the first carrier energy 102, please refer to Fig. 3 which shows a block diagram of the carrier calculation unit in an embodiment. As shown, the carrier calculation unit 10 further includes a conversion unit 110 with a Coordinate Rotation Digital Computer (CORDIC), a frequency reduction unit 120, a CORDIC vector unit 130, and a value calculation unit 140. The CORDIC conversion unit 110 performs an orthogonal frequency modulation to convert the intermediate frequency signal 101 into a baseband signal, and then further into the amplitude orthogonal component. The amplitude orthogonal component includes a baseband component I and component Q. In order to equip the detection apparatus 1 (Fig. 1) with higher power/calculation efficiency, the amplitude orthogonal components I and Q are limited to a certain bandwidth by the frequency reduction unit 120, so as to produce the amplitude orthogonal components (I' and Q') based on a sampling rate. For example, the sampling rate of 24.576 MHz outputted of the ADC is reduced to the sampling rate of 384 kHz of the amplitude orthogonal components (I' and Q') through the frequency reduction unit 120.

Next, the CORDIC vector unit 130 converts the amplitude orthogonal components (I' and Q') into a second carrier energy 102' according to the polar coordinate values of each component. The second carrier energy 102' is then accumulated to collect a predetermined number of samples (e.g., 4096 samples) via a first counter 1410 in the value calculation unit 140, and the value calculation unit 140 then carries out an averaging operation and outputs the first carrier energy 102 of the currently scanned frequency band.

The phase generator 130 in Fig. 2 is used to define the fixed frequencies of the above described twelve frequency bands and to provide frequency band shift to the carrier calculation unit 10, so as to subsequently complete the calculation of the first carrier energy 102 for each pre-recorded band. A frequency band counter 210 in the switching controller 20 is used to count the frequency band shift provided by the carrier calculation unit 10 via the phase generator 30, so as to make sure that the first carrier energy 102 has been produced on each of the frequency bands. Then, the switching controller 20 gathers the statistic information of the first carrier energy 102 on each of the frequency bands to determine which frequency band(s) has been occupied by carrier. As described above, each audio broadcasting signal format has at least one primary carrier, and in the present invention, the detection apparatus 1 is primarily used to detect the audio standard essentially by determining the frequency band where the primary carrier exists. Therefore, it is according to a threshold value 201 that the mentioned switch controller 20 further analyzes whether the primary carrier existed in the detected frequency band is an effective carrier.

Since the primary carriers included in different audio broadcasting format's signals may be analog and/or digital carriers, for different types of primary carriers, the switch controller 20 needs to utilize different methods to analyze the frequency band occupied by the primary carrier. For example, a hysteresis analyzing scheme is operated to analyze the frequency band occupied by analog primary carrier, and further a floating analyzing scheme is used to analyze the frequency band occupied by digital primary carrier. In particular, two thresholds are provided for the hysteresis scheme to repeatedly screen the analog primary carrier. If the analog primary carrier is less than a first threshold, it is regarded as ineffective carrier, or only if the analog primary carrier is larger than a second threshold, it can be regarded as an effective carrier. Here, the ineffective carrier might be the noise or a surge caused by interference, but not the carrier signal of the audio broadcasting format's signal. Thus only the effective carrier is classified as the audio broadcasting format's carrier signal through those thresholds.

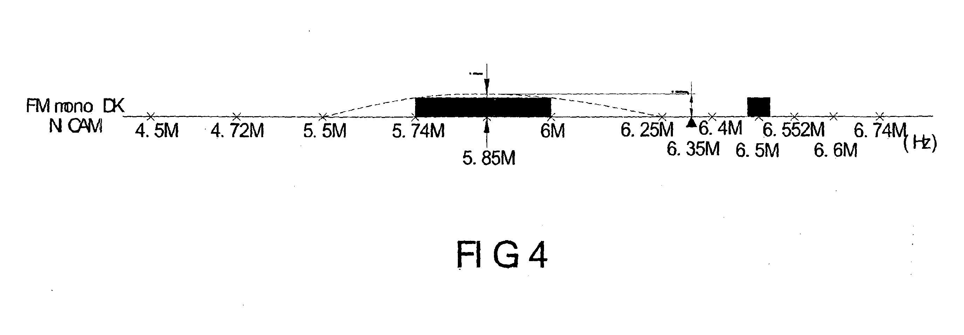

Please refer to Fig. 4, in order to illustrate the floating scheme, which is a schematic view showing the spectrum of NICAM audio broadcasting signal's format. The NICAM signal format includes digital and analog primary carriers. As shown, the frequency band of the digital primary carrier is located at and around 5.85 MHz, and with a wider bandwidth (approximately arranging from 5.74 MHz to 8 MHz). However, in practice the frequency curve obtained by a spectrum analyzer is shown as the dotted line in Fig. 4. If the difference i between the highest and the lowest level of the carrier at the 5.85 MHz is directly used to be the thresholds 201 for further analysis, a waveform distortion might occur since the digital carriers are easily interfered by noise, so that the thresholds 201 might not be calculated accurately. Therefore, according to the floating scheme, a floating frequency band (such as 6.35 MHz), where it can be insured that the NICAM carrier does not reside, is selected as a basis. Then the level difference j between the floating frequency band and the frequency band 5.85MHz where the digital primary carrier is located, is set as the threshold value 201, so as to complete the detection of the frequency band occupied by the digital primary carrier. In other words, in this floating scheme, the floating noise floor is used to be the threshold.

Therefore, the switch controller 20 can obtain the analyzed frequency band occupied by the effective carrier that is mentioned above. Next, the audio broadcasting format that matches the received audio signal is determined by comparing the analyzed frequency bands with the pre-recorded audio broadcasting format.

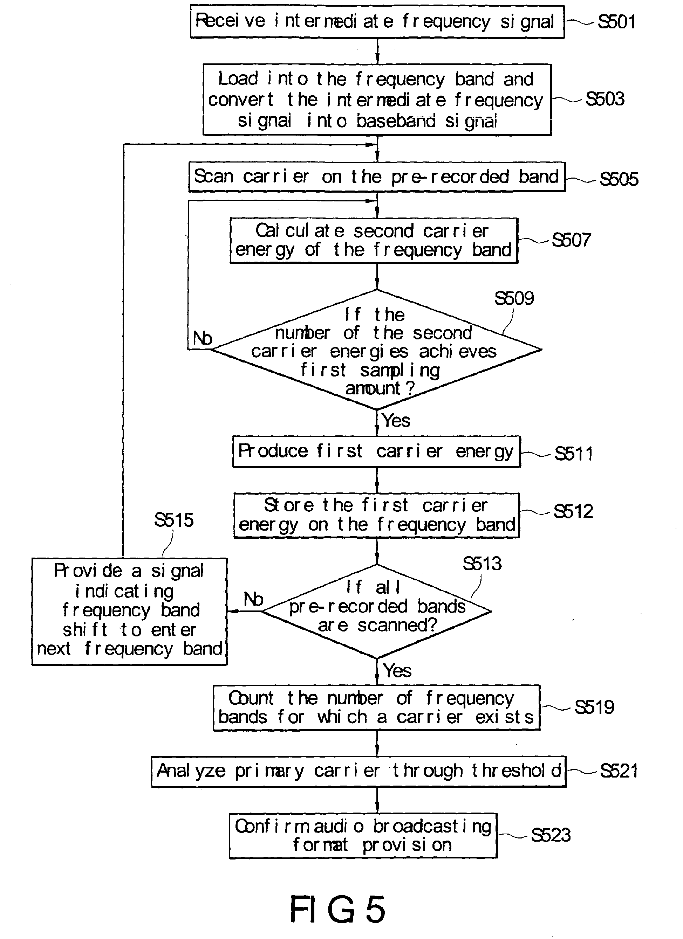

Reference is made to Fig. 5, for further explanation, which shows a flow chart of the audio multi-standard detection method. The current embodiment provides the method implemented by the audio multi-standard detection apparatus 1. Similarly, the detection apparatus 1 as shown in Fig. 2 pre-records the frequency bands occupied by carriers of all audio broadcasting format's signals. The detection method includes the steps of: providing the carrier calculation unit 10 to receive the intermediate frequency signal 101 (S501), sequentially loading the twelve frequency bands as described in Fig. 1 through the frequency band shift of the phase generator 30, and then converting the intermediate frequency signal 101 into a base frequency signal according to the frequency band currently to be scanned (S503). Then the method goes to scan the carriers on the current frequency band via the conversion unit with CORDIC 110 located in the carrier calculation unit 10 (S505), and to calculate the second carrier energy 102' on the current frequency band via the CORDIC vector unit 130 (S507).

To increase the representativeness of the carrier energy calculation, in the design of this embodiment 4096 samples of the second carrier energy 102' are chosen for performing an average operation. The first counter 1410 is used to keep track and determine if the first sample number (4096 samples) of samples of the second carrier energy 102' has been reached (S509). If the result is negative, the step of the carrier scanning on the current frequency band will be repeated; if the result is positive, the accumulated number of the second carrier energy 102' has reaches 4096, and the value operation unit 140 performs the average operation to generate the first carrier energy 102 (S511). Further, a first register (not shown) can be used to store the calculated first carrier energy 102 on the current frequency band (S512). For the skilled person in the art, the average operation described in this embodiment is only for illustrative purpose and the number of samples does not need to be limited to 4096; other averaging strategy or weighted averaging strategy may also be used. Even if the averaging operation is omitted, the second carrier energy value can be still used as the reference for determining the primary carrier.

After step (S512), the frequency band counter 210 determines if all the pre-recorded bands have been scanned (step S513), in order to confirm that the first carrier energy 102 has been calculated on every frequency band. If the result of step (S513) is negative, it indicates that not all the pre-recorded bands have been scanned, and the phase generator 30 will provide a signal instructing frequency band shift to enter the scan for the next pre-recorded band (S515). After that, the steps after (S503) are repeated until twelve pre-recorded bands are completely scanned.

If the result of step (S513) is positive, it indicates that all the pre-recorded bands are completely scanned, and then the switch controller 20 will perform statistics and determine the frequency bands where the carrier actually exists according to the value of first carrier energy 102 that is stored in the first register (S519). In the present invention, the primary carrier detection is carried out based on the frequency bands where the carrier actually exists, but since these detected primary carriers may be the actual audio signal or merely be waveforms produced from noise, the threshold 201 is further applied to analyze the primary carrier (S521). As a result, the frequency band where the effective carrier locates can be obtained. Then, the obtained frequency band is compared with the pre-recorded bands, for deciding the audio broadcasting format that matches the received audio signal (S523). The so determined audio broadcasting format is then provided for subsequent circuitry to adjust the parameters, for correctly processing and playing the audio signal.

Moreover, if after the frequency band where the effective carrier locates is compared with the carrier frequency of the pre-recorded audio broadcasting format's signal, it is determined that the matched audio broadcasting formats are more than one, the preferred audio broadcasting format is provided according to certain priority, and the other matching formats are also provided as alternative option. Said priority is decided by predetermining an order for the different audio broadcasting formats and such order is stored in a second register (not shown). With this arrangement, when more than one matched broadcasting audio format is found, the pre-set order stored in the second register will be referred to as a basis for determining priority.

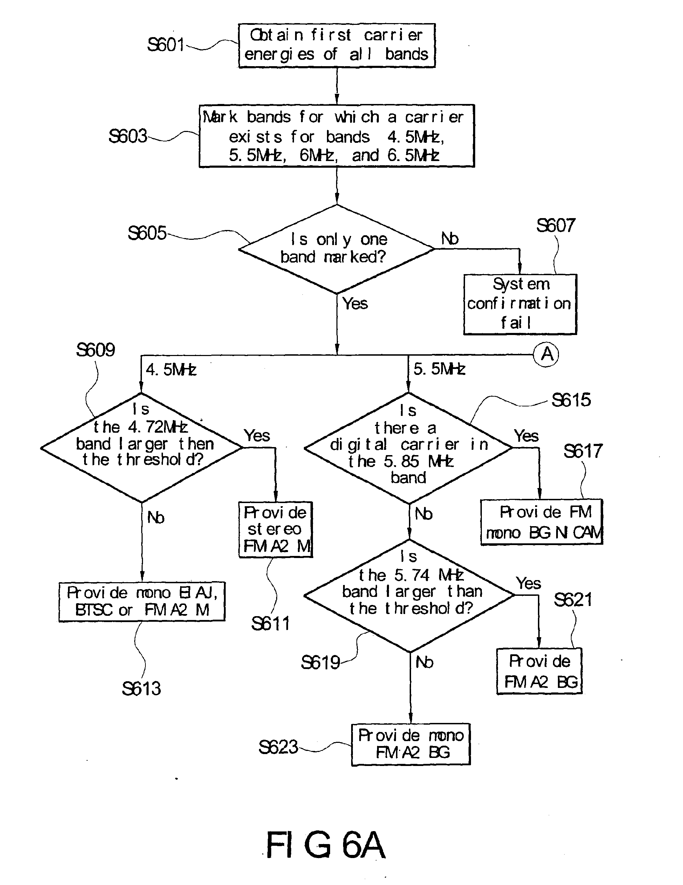

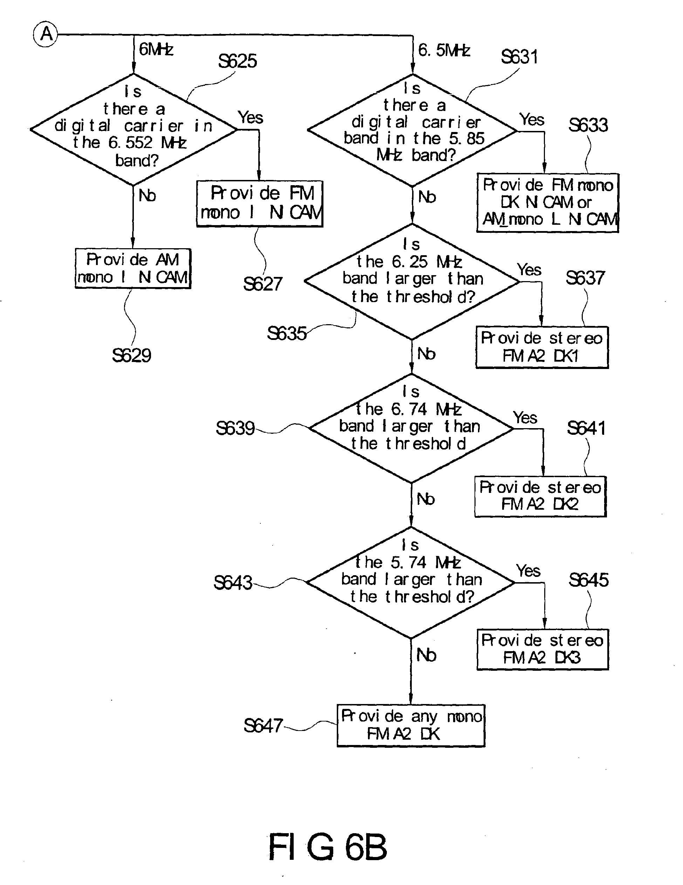

Please refer to Figs. 6A∼6B, which are the flow charts showing the procedure for deciding the audio broadcasting format in an embodiment according to the present invention, and the description of this embodiment corresponds to further details of step (S519) to step (S525) in Fig. 5. It should be noted that this embodiment divides the eleven audio broadcasting formats described in Fig. 1 into a plurality of systems according to the frequency bands occupied by their carriers; for example, they are divided into the following four systems: M/N system (EIAJ, BTSC, FM A2 M), BG system (FM A2 BG, FM mono BG NICAM), I system (FM_mono I NICAM, AM_mono L NICAM), and L/DK system (FM A2 DK1, FM A2 DK2, FM A2 DK3, FM mono DK NICAM, AM_mono L NICAM). The frequency bands used for distinguishing these systems are respectively set to 4.5MHz, 5.5MHz, 6MHz and 6.5MHz.

Therefore, after obtaining the first carrier energy for all pre-recorded bands (s601), the frequency bands 4.5MHz, 5.5MHz, 6MHz, and 6.5MHz where a carrier actually exists are marked (S603). In step (S605), it is determined whether only one frequency band is marked among frequency bands 4.5MHz, 5.5MHz, 6MHz, and 6.5MHz. If the result of step (S605) is negative, it indicates that there is no system to be confirmed (S607). This may be caused by the detection of multiple frequency bands with carriers so that multiple frequency bands are marked and the system cannot be confirmed, or by the fact that no frequency band with a carrier has been detected so that no frequency band is marked.

If the result of step (S605) is positive, it indicates that only one of the frequency bands with carrier is marked, and the subsequent steps are carried out based on the marked frequency band. If the 4.5MHz frequency band is marked, then the signal belongs to the M/N system, and the hysteresis scheme is used to determine whether the 4.72MHz frequency band is larger then the preset threshold (S609). If the result is positive, then both frequency bands 4.5 MHz and 4.72 MHz will have effective carriers, and after comparing with the pre-recorded bands the stereo audio broadcasting format FM A2 M will be selected and provided (S611). In the above case the format will be stereo because two frequency bands have effective carriers.

In contrast, if the result of step (S609) is negative, it indicates that only the 4.5 MHz frequency band has effective carriers, and after comparing with the pre-recorded bands the mono audio broadcasting format EIAJ, BTSC, or FM A2 M will be selected and provided (S613). Here, the audio broadcasting format is provided according to the priority and the other formats are also provided as alternative for enabling switching among formats.

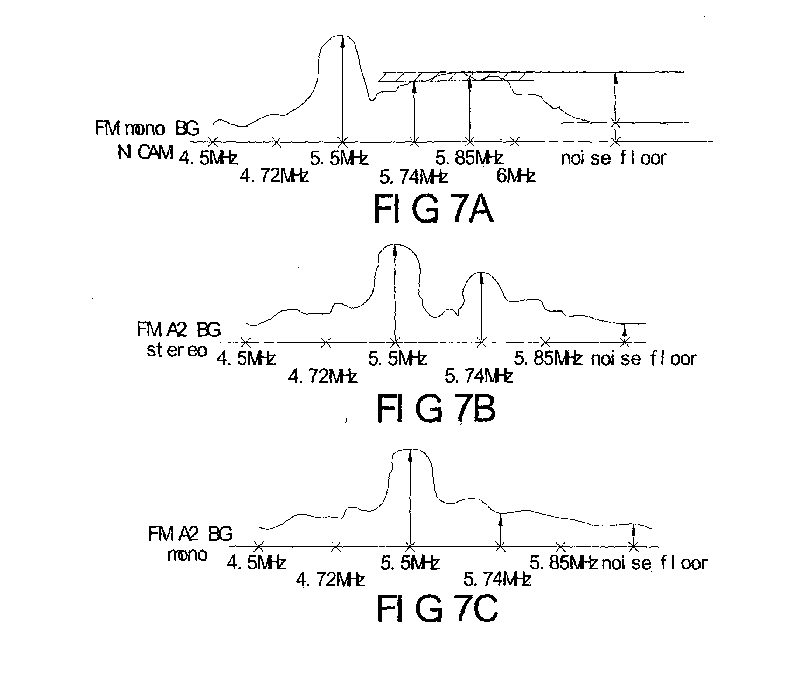

After the result of step (S605) is determined to be positive, the BG system is selected if the 5.5 MHz frequency band is marked. After being selected as BG system, as shown in Fig. 7A, a floating scheme and threshold value are used to determine if there exists any digital carrier at the 5.85 MHz frequency band (S615). If the result is positive, both the frequency bands 5.5 MHz and 5.85 MHz are determined to have effective carriers, and the frequency band 5.85MHz has a digital carrier. Therefore, after comparing with the pre-recorded bands the audio broadcasting format FM mono BG NICAM will be selected and provided (S617).

If the result of step (S615) is negative, as shown in Figs. 7B and 7C, a hysteresis scheme is used to determine whether the 5.74 MHz frequency band is larger than the preset threshold (S619). If the result of step (S619) is positive, both the frequency bands 5.5 MHz and 5.74 MHz are determined to have effective carriers, and thus after comparing with the pre-recorded bands the stereo audio broadcasting format FM A2 BG will be selected and provided (S621). If the result of step (S619) is negative, then the carrier on the 5.74 MHz frequency band is determined as noise, and only the 5.5 MHz frequency band has an effective carrier. Therefore, after comparing with the pre-recorded bands the mono audio broadcasting format FM A2 BG is provided (S623).

After the step (S605) provides a positive result, the I system is selected if the 6 MHz frequency band is marked. After that, the floating scheme and the threshold value are used to determine whether there exists any digital carrier at the 6.552 MHz frequency band (S625). If the result is positive, both the frequency bands 6 MHz and 6.552 MHz will have effective carriers, and the frequency band 6.552MHz has a digital carrier. Therefore, after comparing with the pre-recorded bands the audio broadcasting format FM mono I NICAM will be selected and provided (S627). If the result of step (S625) is negative, it indicates that only the 6 MHz frequency band has effective carriers, and thus after comparing with the pre-recorded bands the audio broadcasting format AM mono L NICAM will be provided (S629).

After the step (S605) provides a positive result, L/DK system is selected if the 6.5 MHz frequency band is marked, and the floating scheme and the threshold value are used to determine whether there exists any digital carrier at the 5.85 MHz frequency band (S631). If the result of step (S631) is positive, both the frequency bands 6.5 MHz and 5.85 MHz will have effective carriers, and the frequency band 5.85 MHz has a digital carrier. Therefore, after comparing with the pre-recorded bands the audio broadcasting format FM mono DK NICAM or AM_mono L NICAM will be selected and provided (S633). The audio broadcasting format is provided according to the priority and the other format is also provided as alternative for enabling switching between formats.

If the result of step (S631) is negative, the hysteresis scheme is used to determine if the 6.25 MHz frequency band is larger than the preset threshold (S635). If the result of step (S635) is positive, then both frequency bands 6.5 MHz and 6.25 MHz will have effective carriers, and thus after comparing with the pre-recorded bands the stereo audio broadcasting format FM A2 DK1 will be selected and provided (S637).

If the result of step (S635) is negative, a hysteresis scheme is used to determine whether the 6.74 MHz frequency band is larger than the preset threshold (S639). If the result of step (S637) is positive, both the frequency bands 6.5 MHz and 6.74 MHz will have effective carriers, and thus after comparing with the pre-recorded bands the stereo audio broadcasting format FM A2 DK2 will be selected and provided (S641).

If the result of step (S639) is negative, the hysteresis scheme is used to determine whether the 5.74 MHz frequency band is larger than the preset threshold (S643). If the result of step (S643) is positive, both the frequency bands 6.5 MHz and 5.74 MHz will have effective carriers, and thus after comparing with the pre-recorded bands the stereo audio broadcasting format FM A2 DK3 will be selected and provided (S645). Finally, if the result of step (S643) is negative, it indicates that only the frequency band 6.5 MHz has an effective carrier, and no digital carrier exists. Therefore, after comparing with the pre-recorded bands any mono audio broadcasting format FM A2 DK can be selected and provided (S647).

It is to be noted that the thresholds described above are adjustable and can have different value in response to varied frequency band analysis schemes. The setting may vary according to different designs and is not meant for limiting the scope of the present invention.

In the aforesaid, the present invention gathers statistics of the carrier energy of the digital SIF signal in order to calculate the first carrier energy and to compare that value with each of the pre-recorded bands to obtain the effective carriers, which are used for audio broadcasting format matching. This method not only provides more precise determination of the audio broadcasting format matching to different digital SIF signals for facilitating the parameter adjustment of the sequential circuit, but also achieves the goal of utilizing only a single audio decoding chip to support the broadcasting systems all over the world. The significantly increased chip application range enables faster global product lunch time by reducing the need for localized assembly changes, and thus prevents wasting of resources. It also enables the product to be shipped from an over-supplied location to an under-supplied location with no need to worry about audio decoding chip re-assembly.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention, which are expressed by the terms of the appended claims.

## Claims

1. An audio multi-standard detection apparatus, having a plurality of pre-recorded audio broadcasting format carrier bands , comprising:
a carrier calculation unit, for receiving an intermediate frequency signal and calculating the signal's first carrier energy in each of the pre-recorded bands ; and
a switch controller, for gathering statistic information of the first carrier energies in the pre-recorded bands in order to obtain at least one pre-recorded band where a carrier exists,
then analyze the obtained band frequency via at least one threshold value to determine at least one effective carrier, from which at least one audio broadcasting format is confirmed,
wherein the at least one audio broadcasting format confirmed by the switch controller comprises the corresponding effective carrier,
**characterised in that**, when the effective carrier matches to more than one audio broadcasting format, the preferred audio broadcasting format is provided according to a predetermined priority order, which is stored in a register.

2. The audio multi-standard detection apparatus as claimed in claim 1, wherein the intermediate frequency signal is a digital sound intermediate frequency (SIF) signal.

3. The audio multi-standard detection apparatus as claimed in claim 1, wherein the first carrier energy is calculated by an amplitude orthogonal component, and the carrier calculation unit further comprises:
a conversion unit with coordinate rotation digital computer (CORDIC), for converting the intermediate frequency signal into a baseband signal and from there into the amplitude orthogonal component;
a frequency reduction unit, for limiting the amplitude orthogonal component, so as to obtain the amplitude orthogonal components of the sampling rate;
a CORDIC vector unit, for converting the amplitude orthogonal components of the sampling rate into a second carrier energy; and
a value operation unit, used to obtain the average of the second carrier energies when the accumulated number of second carrier energies equals a predetermined number of samples, and to output that average value as the first carrier energy.

4. The audio multi-standard detection apparatus as claimed in claim 3, wherein the amplitude orthogonal component comprises a baseband component I and a baseband component Q.

5. The audio multi-standard detection apparatus as claimed in claim 3, wherein the value operation unit further comprises a first counter for counting the number of the accumulated second carrier energies in order to determine when the predetermined number of samples has been reached.

6. The audio multi-standard detection apparatus as claimed in claim 1, wherein the existing carrier comprises at least one primary carrier, and the primary carrier is analyzed through a hysteresis or floating scheme.

7. The audio multi-standard detection apparatus as claimed in claim 6, wherein the hysteresis scheme utilizes two threshold values to analyze an analog primary carrier.

8. The audio multi-standard detection apparatus as claimed in claim 6, wherein the floating scheme utilizes an operation with a floating frequency band to produce the threshold, so as to analyze a digital primary carrier.

9. The audio multi-standard detection apparatus as claimed in claim 1, further comprising a phase generator for defining a fixed frequency of the pre-recorded bands and for providing a signal indicating frequency band shift to the carrier calculation unit.

10. The audio multi-standard detection apparatus as claimed in claim 9, wherein the switch controller further comprises a frequency band counter for counting whether the carrier calculation unit produces the first carrier energy on each of the pre-recorded bands according to the phase generator's signal indicating frequency band shift.

11. An audio multi-standard detection method, wherein a plurality of audio broadcasting format carrier bands are pre-recorded (pre-recorded bands), an intermediate frequency signal is received, and the intermediate frequency signal is converted into a baseband signal according to the pre-recorded bands, the method comprising the steps of:
scanning carriers of the baseband signal on the pre-recorded bands and respectively calculating each carrier's first carrier energy;
finding at least one pre-recorded band where carrier exists according to the first carrier energy values;
analyzing the band frequency where a carrier exists via at least one threshold for obtaining at least one effective carrier; and
comparing the effective carrier with the pre-recorded bands to selectively output signals in at least one of the audio broadcasting formats,
wherein the at least one selectively outputted audio broadcasting format comprises the
corresponding effective carrier,
**characterised in that**, when the effective carrier matches to more than one audio broadcasting format,
the preferred audio broadcasting format is provided according to a predetermined priority order.

12. The audio multi-standard detection method as claimed in claim 11, wherein the first carrier energy is calculated by an amplitude orthogonal component and the carrier of the baseband signal is converted into the amplitude orthogonal component.

13. The audio multi-standard detection method as claimed in claim 12, wherein the amplitude orthogonal component comprises a baseband component I and a baseband component Q.

14. The audio multi-standard detection method as claimed in claim 11, wherein the existing carrier comprises at least one primary carrier, and the threshold analyzes the primary carrier via a hysteresis or floating scheme.

15. The audio multi-standard detection method as claimed in claim 14, wherein the hysteresis scheme utilizes two thresholds to analyze the analog primary carrier.

16. The audio multi-standard detection method as claimed in claim 14, wherein the floating scheme uses an operation with a floating frequency band to produce the threshold, so as to analyze a digital primary carrier.

17. The audio multi-standard detection method as claimed in claim 11, wherein one audio broadcasting format is selected from a list of matching formats if there are multiple audio broadcasting formats obtained after the pre-recorded bands have been compared with the effective carrier.

18. The audio multi-standard detection method as claimed in claim 11, wherein a first counter is provided for counting and tracking the accumulated number of a second carrier energies sampled at each of the pre-recorded bands, wherein an averaging operation will be performed when the accumulated number equals a predetermined number of samples, and the result of the averaging is the first carrier energy.

19. The audio multi-standard detection method as claimed in claim 11, wherein a frequency band counter is further provided for counting frequency band shift so as to determine whether the pre-recorded bands respectively have a first carrier energy, and if the result is positive then store the first carrier energy values for finding the existing carrier.

## Patentansprüche

1. Apparat zur Erkennung von Mehrfachaudiostandards, der eine Vielzahl von vorgegebenen Trägerbändern für Audioübertragungsformate aufweist und der umfasst:
eine Trägerberechnungseinheit zum Empfangen eines Zwischenfrequenzsignals und Berechnen der ersten Trägerenergie des Signals in jedem der vorgegebenen Bändern; und
eine Schaltsteuerung zum Sammeln von statistischen Informationen über die ersten Trägerenergien in den vorgegebenen Bändern, um mindestens ein vorgegebenes Band zu erhalten, in dem ein Träger existiert, und um dann die erhaltene Bandfrequenz mithilfe von mindestens einem Schwellenwert zu analysieren, um mindestens einen effektiven Träger zu bestimmen, von dem mindestens ein Audioübertragungsformat bestätigt ist, wobei das mindestens eine Audioübertragungsformat, das durch die Schaltsteuerung bestätigt ist, den entsprechenden effektiven Träger umfasst,
**dadurch gekennzeichnet, dass** wenn der effektive Träger zu mehr als einem Audioübertragungsformat passt, das bevorzugte Audioübertragungsformat anhand einer vorbestimmten Prioritätsreihenfolge, die in einem Register gespeichert ist, bereitgestellt wird.

2. Apparat zur Erkennung von Mehrfachaudiostandards nach Anspruch 1, wobei das Zwischenfrequenzsignal ein digitales Zwischenfrequenztonsignal (SIF) ist.

3. Apparat zur Erkennung von Mehrfachaudiostandards nach Anspruch 1, wobei die erste Trägerenergie mithilfe einer orthogonalen Amplitudenkomponente berechnet wird und wobei die Trägerberechnungseinheit ferner umfasst:
eine Umwandlungseinheit mit einem Digitalcomputer für Koordinatenrotation (CORDIC) zum Umwandeln des Zwischenfrequenzsignals in ein Basisbandsignal und von dort in die orthogonale Amplitudenkomponente;
eine Frequenzreduziereinheit zum Begrenzen der orthogonalen Amplitudenkomponente, um die orthogonale Amplitudenkomponenten der Abtastrate zu erhalten; eine CORDIC Vektoreinheit zum Umwandeln der orthogonalen Amplitudenkomponente der Abtastrate in eine zweite Trägerenergie; und
eine Wertbearbeitungseinheit, die verwendet wird, um den Durchschnitt der zweiten Trägerenergien zu erhalten, wenn die akkumulierte Anzahl an zweiten Trägerenergien gleich einer vorbestimmten Anzahl an Proben ist, und um den Durchschnittswert als die erste Trägerenergie auszugeben.

4. Apparat zur Erkennung von Mehrfachaudiostandards nach Anspruch 3, wobei die orthogonale Amplitudenkomponente eine Basisbandkomponente I und eine Basisbandkomponente Q umfasst.

5. Apparat zur Erkennung von Mehrfachaudiostandards nach Anspruch 3, wobei die Wertbearbeitungseinheit ferner einen ersten Zähler zum Zählen der Anzahl an akkumulierten zweiten Trägerenergien umfasst, um zu bestimmen, wann die vorbestimmte Anzahl an Stichproben erreicht wurde.

6. Apparat zur Erkennung von Mehrfachaudiostandards nach Anspruch 1, wobei der vorhandene Träger mindestens einen Primärträger umfasst und wobei der Primärträger anhand eines Hysterese - oder Gleitschemas analysiert wird.

7. Apparat zur Erkennung von Mehrfachaudiostandards nach Anspruch 6, wobei das Hystereseschema zwei Schwellenwerte verwendet, um einen analogen Primärträger zu analysieren.

8. Apparat zur Erkennung von Mehrfachaudiostandards nach Anspruch 6, wobei das Gleitschema eine Operation mit einem Gleitfrequenzband nutzt, um die Schwelle zu erzeugen, um einen digitalen Primärträger zu analysieren.

9. Apparat zur Erkennung von Mehrfachaudiostandards nach Anspruch 1, der ferner einen Phasengenerator zum Definieren einer festen Frequenz der vorgegebenen Bänder und zum Bereitstellen eines Signals umfasst, das der Trägerberechnungseinheit eine Frequenzbandverschiebung anzeigt.

10. Apparat zur Erkennung von Mehrfachaudiostandards nach Anspruch 9, wobei die Schaltsteuerung ferner einen Frequenzbandzähler umfasst, um zu zählen, ob die Trägerberechnungseinheit die erste Trägerenergie von jedem der vorgegebenen Bänder anhand des Signals des Phasengenerators erzeugt, das die Frequenzbandverschiebung anzeigt.

11. Verfahren zur Erkennung von Mehrfachaudiostandards, wobei eine Vielzahl von Trägerbändern für Audioübertragungsformate vorgegeben werden (vorgegebene Bänder), wobei ein Zwischenfrequenzsignal empfangen wird und wobei das Zwischenfrequenzsignal gemäß der vorgegebenen Bänder in ein Basisbandsignal umgewandelt wird, wobei das Verfahren die Schritte umfasst:
Abtasten der Träger des Basisbandssignals der vorgegebenen Bänder und jeweils Berechnen erster Trägerenergien von jedem Träger;
Finden von mindestens einem vorgegebenen Band, in dem ein Träger existiert, gemäß der ersten Trägerenergiewerte;
Analysieren der Bandfrequenz, in der ein Träger existiert, mithilfe mindestens einer Schwelle, um mindestens einen effektiven Träger zu erhalten; und
Vergleichen der effektiven Träger mit den vorgegebenen Bändern, um selektiv Signale in mindestens einem derAudioübertragungsformate auszugeben,
wobei das mindestens eine selektiv ausgegebene Audioübertragungsformat den entsprechenden effektiven Träger umfasst,
**dadurch gekennzeichnet, dass** wenn der effektive Träger zu mehr als einem Audioübertragungsformat passt, das bevorzugte Audioübertragungsformat anhand einer vorbestimmten Prioritätsreihenfolge bereitgestellt wird.

12. Verfahren zur Erkennung von Mehrfachaudiostandards nach Anspruch 11, wobei die erste Trägerenergie mithilfe einer orthogonalen Amplitudenkomponente berechnet wird und wobei der Träger des Basisbandsignals in die orthogonale Amplitudenkomponente umgewandelt wird.

13. Verfahren zur Erkennung von Mehrfachaudiostandards nach Anspruch 12, wobei die orthogonale Amplitudenkomponente eine Basisbandkomponente 1 und einer Basisbandkomponente Q umfasst.

14. Verfahren zur Erkennung von Mehrfachaudiostandards nach Anspruch 11, wobei der vorhandene Träger mindestens einen Primärträger umfasst und wobei der Primärträger gemäß eines Hysterese - oder Gleitschemas analysiert wird.

15. Verfahren zur Erkennung von Mehrfachaudiostandards nach Anspruch 14, wobei das Hystereseschema zwei Schwellenwerte verwendet, um den analogen Primärträger zu analysieren.

16. Verfahren zur Erkennung von Mehrfachaudiostandards nach Anspruch 14, wobei das Gleitschema eine Operation mit einem Gleitfrequenzband nutzt, um die Schwelle zu erzeugen, um einen digitalen Primärträger zu analysieren.

17. Verfahren zur Erkennung von Mehrfachaudiostandards nach Anspruch 11, wobei ein Audioübertragungsformat aus einer Liste von passenden Formaten ausgewählt wird, wenn mehrere Audioübertragungsformate erhalten werden, nachdem die vorgegebenen Bänder mit den effektiven Trägern verglichen wurden.

18. Verfahren zur Erkennung von Mehrfachaudiostandards nach Anspruch 11, wobei ein erster Zähler zum Zählen und Nachverfolgen der akkumulierten Anzahl von zweiten Trägerenergien bereitgestellt wird, die bei jedem der vorgegebenen Bänder abgetastet werden, wobei eine einen Durchschnitt bildende Operationen ausgeführt wird, wenn die akkumulierte Anzahl gleich einer vorbestimmten Anzahl an Proben ist und wobei das Ergebnis der Durchschnittsbildung die erste Trägerenergie ist.

19. Verfahren zur Erkennung von Mehrfachaudiostandards nach Anspruch 11, wobei ein Frequenzbandzähler ferner zum Zählen von Frequenzbandverschiebungen bereitgestellt wird, um zu bestimmen, ob die vorher aufgenommenen Bänder jeweils eine erste Trägerenergie aufweisen, und um die ersten Trägerenergiewerte zum Finden der vorhandenen Träger zu speichern, wenn das Ergebnis der Bestimmung positiv ist.

## Revendications

1. Appareil de détection audio multistandard ayant une pluralité de bandes porteuses pré-enregistrées de format de radiodiffusion sonore comprenant :
une unité de calcul de porteuse pour recevoir un signal de fréquence intermédiaire et pour calculer l'énergie de la première porteuse du signal dans chacune des bandes pré-enregistrées et
un contrôleur de commutation pour collecter des informations statistiques des énergies de la première porteuse dans les bandes pré-enregistrées pour obtenir au moins une bande pré-enregistrée où il existe une porteuse, puis pour analyser la fréquence de bande obtenue par au moins une valeur de seuil pour déterminer au moins une porteuse efficace à partir de laquelle au moins un format de radiodiffusion sonore est confirmé, le format de radiodiffusion sonore qui existe au moins confirmé par le contrôleur de commutation comprenant la porteuse efficace correspondante,
**caractérisé en ce que**, lorsque la porteuse efficace correspond à plus d'un format de radiodiffusion sonore, le format de radiodiffusion sonore préféré est fourni selon un ordre de priorité prédéterminé qui est enregistré dans un registre.

2. Appareil de détection audio multistandard selon la revendication 1, le signal de fréquence intermédiaire étant un signal de fréquence intermédiaire de son (SIF) numérique.

3. Appareil de détection audio multistandard selon la revendication 1, l'énergie de la première porteuse étant calculée par une composante orthogonale d'amplitude et l'unité de calcul de porteuse comprenant de plus :
une unité de conversion avec un ordinateur numérique par rotation de coordonnées (CORDIC) pour convertir le signal de fréquence intermédiaire en un signal en bande de base et de là en composante orthogonale d'amplitude ;
une unité de réduction de fréquence pour limiter la composante orthogonale d'amplitude de manière à obtenir les composantes orthogonales d'amplitude du taux d'échantillonnage ;
une unité à vecteur CORDIC pour convertir les composantes orthogonales d'amplitude du taux d'échantillonnage en une énergie de seconde porteuse et une unité d'opération de valeurs utilisée pour obtenir la moyenne des énergies de la seconde porteuse lorsque le nombre accumulé des énergies de la seconde porteuse est égal à un nombre prédéterminé d'échantillons et pour sortir cette valeur moyenne comme étant l'énergie de la première porteuse.

4. Appareil de détection audio multistandard selon la revendication 3, la composante orthogonale d'amplitude comprenant une composante de bande de base I et une composante de bande de base Q.

5. Appareil de détection audio multistandard selon la revendication 3, l'unité d'opération de valeurs comprenant de plus un premier compteur pour compter le nombre d'énergies accumulées de la seconde porteuse pour déterminer si le nombre prédéterminé d'échantillons a été atteint.

6. Appareil de détection audio multistandard selon la revendication 1, la porteuse existante comprenant au moins une porteuse primaire et la porteuse primaire étant analysée par un schéma d'hystérésis ou un schéma flottant.

7. Appareil de détection audio multistandard selon la revendication 6, le schéma d'hystérésis utilisant deux valeurs de seuil pour analyser une porteuse primaire analogique.

8. Appareil de détection audio multistandard selon la revendication 6, le schéma flottant utilisant une opération avec une bande de fréquence flottante pour produire le seuil de manière à analyser une porteuse primaire numérique.

9. Appareil de détection audio multistandard selon la revendication 1 comprenant de plus un générateur de phase pour définir une fréquence fixe des bandes pré-enregistrées et pour fournir un signal indiquant le déplacement de la bande de fréquence à l'unité de calcul de porteuse.

10. Appareil de détection audio multistandard selon la revendication 9, le contrôleur de commutation comprenant de plus un compteur de bande de fréquence pour compter si l'unité de calcul de porteuse produit l'énergie de la première porteuse sur chacune des bandes pré-enregistrées selon le signal du générateur de phase qui indique le déplacement de la bande de fréquence.

11. Procédé de détection audio multistandard dans lequel une pluralité de bandes porteuses au format de radiodiffusion sonore sont pré-enregistrées (bandes pré-enregistrées), un signal de fréquence intermédiaire est reçu et le signal de fréquence intermédiaire est converti en un signal de bande de base selon les bandes pré-enregistrées, le procédé comprenant les étapes de :
balayer les porteuses du signal de bande de base sur les bandes pré-enregistrées etla calculer respectivement l'énergie de première porteuse de chaque porteuse ;
trouver au moins une bande pré-enregistrée où la porteuse existe selon les valeurs d'énergie de la première porteuse ;
analyser la fréquence de bande où une porteuse existe par au moins un seuil pour obtenir au moins une porteuse efficace et
comparer la porteuse efficace avec les bandes pré-enregistrées pour sortir de manière sélective des signaux dans au moins l'un des formats de radiodiffusion sonore,
le format de radiodiffusion sonore sorti de manière sélective qui existe au moins comprenant la porteuse efficace correspondante,
**caractérisé en ce que** la porteuse efficace correspond à plus d'un format de radiodiffusion sonore, le format de radiodiffusion sonore préféré étant fourni selon un ordre de priorité prédéterminé.

12. Procédé de détection audio multistandard selon la revendication 11, l'énergie de la première porteuse étant calculée par une composante orthogonale d'amplitude et la porteuse du signal de bande de base étant convertie en composante orthogonale d'amplitude.

13. Procédé de détection audio multistandard selon la revendication 12, la composante orthogonale d'amplitude comprenant une composante de bande de base I et une composante de bande de base Q.

14. Procédé de détection audio multistandard selon la revendication 11, la porteuse existante comprenant au moins une porteuse primaire et le seuil analysant la porteuse primaire par un schéma d'hystérésis ou un schéma flottant.

15. Procédé de détection audio multistandard selon la revendication 14, le schéma d'hystérésis utilisant deux valeurs de seuil pour analyser une porteuse primaire analogique.

16. Procédé de détection audio multistandard selon la revendication 14, le schéma utilisant une opération avec une bande de fréquence flottante pour produire le seuil de manière à analyser une porteuse primaire numérique.

17. Procédé de détection audio multistandard selon la revendication 11, un format de radiodiffusion sonore étant sélectionné dans une liste de formats correspondants s'il y a des formats multiples de radiodiffusion obtenus après que les bandes pré-enregistrées aient été comparées à la porteuse efficace.

18. Procédé de détection audio multistandard selon la revendication 11, un premier compteur étant fourni pour compter et suivre le nombre accumulé d'énergies de la seconde porteuse échantillonnées au niveau de chacune des bandes pré-enregistrées, une opération de calcul de valeur moyenne étant effectué lorsque le nombre accumulé est égal à un nombre prédéterminé d'échantillons et le résultat de la moyenne est l'énergie de la première porteuse.

19. Procédé de détection audio multistandard selon la revendication 11, un compteur de bande de fréquence étant de plus fourni pour compter le déplacement de bande de fréquence de manière à déterminer si les bandes pré-enregistrées ont respectivement une énergie de la première porteuse et si le résultat est positif à ensuite mémoriser les valeurs d'énergie de la première porteuse pour trouver la porteuse existante.
